# EUROPEAN PATENT SPECIFICATION

(11) **EP 2 030 881 B1**
(45) Date of publication and mention of the grant of the patent: **27.07.2011**
(21) Application number: 08163305.9
(22) Date of filing: 29.08.2008
(51) Int. Cl.: B62J 13/00

(54) **Chain guard for a bicycle**
Kettenschutz für ein Fahrrad
Protection de chaîne pour vélo

(30) Priority: 29.08.2007 NL 1034302
(43) Date of publication of application: 04.03.2009
(73) Proprietor: De Woerd B.V., 3771 VG Barneveld (NL)
(72) Inventor: Bos, Robin, 3961 CG, WIJK BIJ DUURSTEDE (NL)
(74) Representative: Brookhuis, Hendrik Jan Arnold

(56) References cited:
- DE-B- 1 200 155
- GB-A- 847 836

## Description

The invention relates to the field of bicycle chain guards. A bicycle chain guard is used to completely screen off the chain from the outside world, in particular, to prevent the contamination of the bicycle chain and the sprockets.

The frame of the bicycle is such in many well-known bicycles that the bicycle chain crosses a horizontal rear fork rod of the frame since the rear sprocket is fitted on the inside of the rear end of the horizontal rear fork rod. This rear end is usually adapted for fastening the shaft of the rear wheel. A gear mechanism may be provided in the hub of the back wheel. The invention relates to chain guards for this type of bicycle.

Known chain guards are disclosed in the documents GB-A-847836 and DE-B-12 00 155.

It is known that a chain guard is a relevant part where the overall appearance of a bicycle is concerned. This is the reason why bicycle manufacturers ask the producers of chain guards to provide different embodiments of chain guards even when the design of the frame is (nearly) the same.

It is, for example, generally known to provide a chain guard with a see-through opening, wherein the horizontal rear fork rod extends through this see-through opening and is there freely visible. The see-through opening is usually so large that one has an unobstructed view through the guard both above and below the rear fork rod, so that an "open structure" is obtained that provides an "airy picture".

Another well-known version of a chain guard is the "closed chain guard", wherein the front of the chain guard is "closed" and the horizontal rear fork rod is completely or nearly completely invisible because of the front of the chain guard. There is a variant known of this where only the rear section of the horizontal rear fork rod is visible and another variant where the horizontal rear fork rod and, in practice, also the bottom part of the vertical rear fork rod are completely covered by the chain guard at the front.

As it will also emerge from the description of the invention, the design of the chain guard has a considerable impact on the overall picture of the bicycle, even when the chain guards are installed on a bicycle with the same frame.

It is, furthermore, generally known to assemble such chain guards from plastic parts that have been made through injection moulding in order to obtain the required quality and durability. All kinds of colour combinations and surface qualities can be obtained by applying high-quality injection moulding technologies and equipment. Use is also made of multiple component injection moulding technologies such as 2-component injection moulding.

Up to now, the manufacture of different designs of plastic chain guards demands an undesired effort from the producers, in particular, with regard to the required injection moulds that are usually expensive and with regard to the speed with which the demand of the bicycle manufacturers for different designs can be anticipated.

The invention aims at solving the abovementioned issue and/or to provide improvements in this area.

The invention provides a system for the assembly of differently embodied chain guards as well as a method for the production of differently embodied chain guards.

The invention provides for a guard base that is assembled from one or more plastic components each produced through injection moulding, wherein the guard base has a back wall that screens off the bicycle chain on the rear side that is turned towards the wheel, which guard base has a peripheral wall which extends around the outer periphery of the back wall and is integral therewith, which peripheral wall protrudes from the back wall to the front. Herein the back wall is provided with a rear fork rod opening that is such that the horizontal rear fork rod extends through it when the chain guard is fastened to the frame. The guard base also has a front wall opening at the front that is such that the horizontal rear fork rod extends through it when the chain guard has been fastened to the frame, said front wall opening being present in a front wall of the guard base or the front wall opening being delimited by the peripheral wall itself.

The invention also provides for at least two of the system elements a), b), c) mentioned below that can be installed on the guard base as desired for the realisation of the chain guard of the required embodiment:
a) an opened front plate that can be installed on the guard base, which opened front plate has a ring wall that extends around a see-through opening in such a way that the ring wall of the installed opened front plate connects to the back wall of the guard base around the rear fork rod opening therein and in such a way that the horizontal rear fork rod is universally exposed in the area of the see-through opening formed by the ring wall, and which opened front plate also has a cover plate portion that is integral with the ring wall and extends from the front of the ring wall around the ring wall and at least covers the front wall opening,
b) a first type of a closed front plate that can be installed on the guard base, which closed front plate substantially covers the front wall opening, wherein the closed front plate near the fastening of the rear shaft is provided with an opening for the rear part of the horizontal rear fork so that only the rear part of the horizontal rear fork can be seen at the front of the chain guard,
c) a second type of a closed front plate that can be installed on the guard base, which closed front plate fully covers the front wall opening and is embodied in such a way that the horizontal rear fork rod is completely covered at the front of the chain guard.

This "system" offers the possibility of producing a considerable diversity of chain guards with relatively few differently formed parts and, therefore, relatively few moulds.

In particular a "uniform basic model" can be sufficient for the guard base, for which then one or more specific injection moulds are provided. It should be clear that colour variations of the guard base can then be easily realised.

By providing suitable fixing means, of which examples will be further explained, a "uniform basic model" of the guard base can not only be installed on identical frames when it concerns their relevant sizes but also on frames with somewhat deviating sizes, in particular when the rear fixing devices provide one or more adjustment possibilities.

The one or more parts of the guard base will in practice demand the most complex and, therefore expensive injection moulds while an injection mould for a corresponding system element a), b) or c) can, in general, be less complex and, therefore, cheaper. This offers the possibility to specifically realise an injection mould for such a system element based on the required design of the system element concerned and then to install this specifically designed system element in the uniform basic model of the guard base.

It is noted that it is known to use one or more movable cores and/or mould inserts in a mould to implement relatively small variations in an injection mould such as fixing provisions.

The inventive system, for example, offers the producer of chain guards the possibility to produce a stock of guard base parts and then to select a batch of a specific system element a), b) or c) based on a specific order that will then be installed on the guard base. This installation occurs, preferably, during the assembly of the bicycle at the bicycle factory.

Preferably, the inventive system at least comprises system element a), therefore, the opened front plate, and then at least one of the system elements b) or c) so that the bicycle manufacturer has the choice between a model of the chain guard with a see-through opening and a closed chain guard.

The preferred option is, of course, to produce all three system elements a), b) and c) and/or to have available the injection moulds concerned so that the bicycle manufacturer can choose from these three different models.

The invention will be further explained with reference to the drawing. The drawing shows:
Fig. 1 a schematic representation of a part of a bicycle provided with a guard base of a chain guard according to the system of the invention;
Fig. 2 a schematic representation of a vertical section over the line II-II in figure 1;
Fig. 3 the bicycle of figure 1, wherein the guard base has also been provided with an opened front plate in a first variant;
Fig. 3a the guard base and opened front plate of the chain guard of figure 3 in a vertical section;
Fig. 4 the bicycle of figure 1, wherein the guard base has also been provided with an opened front plate in a second variant;
Fig. 5 the bicycle of figure 1, wherein the guard base has also been provided with an opened front plate in a third variant;
Fig. 6 the bicycle of figure 1, wherein the guard base has also been provided with an opened front plate in a fourth variant;
Fig. 7 the bicycle and the guard base of figure 1 that have also been provided with a first variant of a closed front plate of the first type according to the system of the invention;
Fig. 8 the bicycle and the guard base of figure 1 that have also been provided with a second variant of a closed front plate of the first type according to the system of the invention;
Fig. 9 the bicycle and the guard base of figure 1 that have also been provided with a third variant of a closed front plate of the first type according to the system of the invention;
Fig. 10 the bicycle and the guard base of figure 1 that have also been provided with a first variant of a closed front plate of the second type according to the system of the invention;
Fig. 11 the bicycle and the guard base of figure 1 that have also been provided with a second variant of a closed front plate of the second type according to the system of the invention;
Fig. 12 the bicycle and the guard base of figure 1 that have also been provided with a third variant of a closed front plate of the second type according to the system of the invention.

A part of a traditional bicycle model is shown in the figures with a rear wheel 1 that is mounted in a bicycle frame. This bicycle frame has a rear fork with two horizontal rear fork rods 2, two vertical rear fork rods 3, wherein the rear fork rods come together near the fixing provision (often called the rear pad) for the shaft of the rear wheel 1. A mudguard rod 5 of mudguard 5a can also be seen in the example as well as a saddle tube 6 and frame tube 7.

The frame also has, as is known but not shown here, a crankshaft bearing bush (at the bottom of the saddle tube 6 and frame tube 7). The crankshaft bearing bush carries the pedal shaft on which the pedals and the front sprocket 9 are installed.

The rear sprocket 10 and the bicycle chain 11 can also be seen, which chain extends around the front and rear sprocket.

The bicycle is of the type where the bicycle chain 11 crosses the horizontal rear fork rod 2 (viewed from the top view) since the rear sprocket 9 is on the inside of the rear end of the rear fork rod 2.

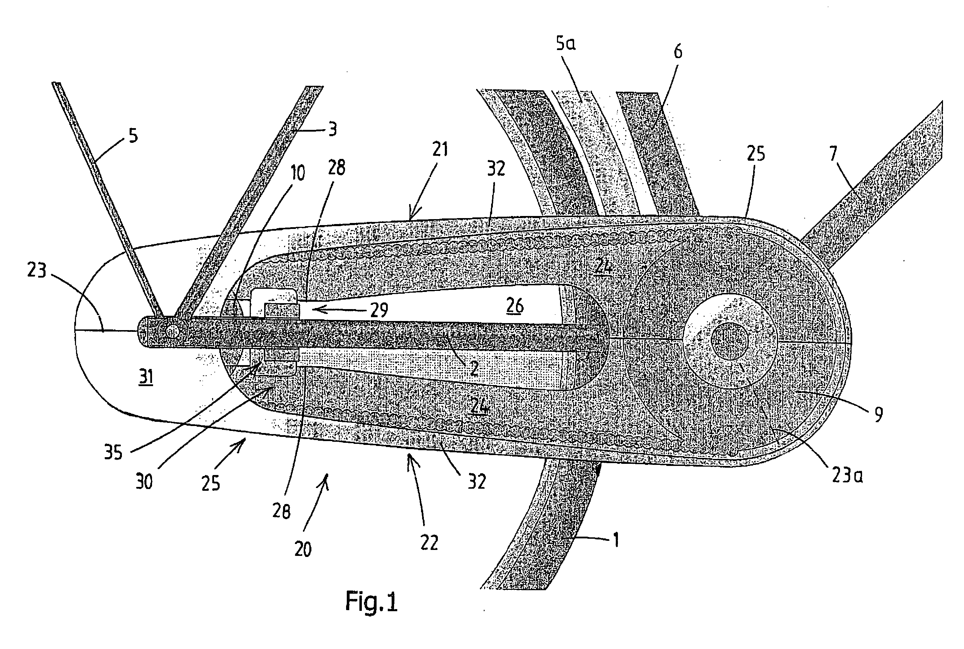

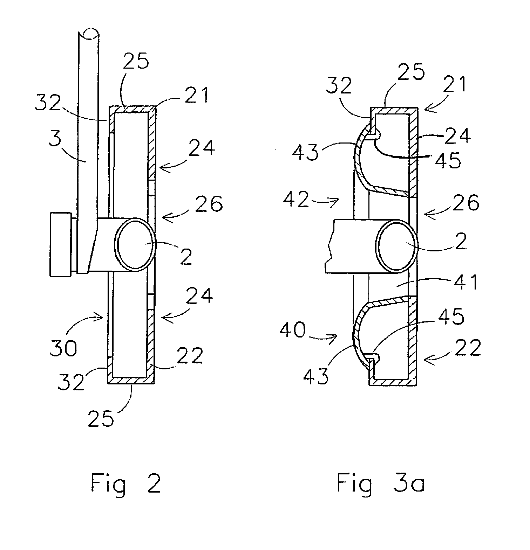

Below, first an embodiment of a guard base of the system according to the invention will be explained with reference to figures 1 and 2.

In this example, the guard base 20 is assembled from two plastic parts each made through injection moulding, namely, a top guard base part 21 and a bottom guard base part 22. Generally, the preferred option is to provide a two-part embodiment of the guard base. In this example, parts 21 and 22 are joined together along a longitudinal division seam 23 (here in the plane of the shafts of the sprockets 9, 10 as is the preferred choice). Another development of the division seam such as, for example, indicated with line 23a, is also conceivable.

The guard base parts 21, 22 together form the guard base of the chain guard. This guard base has a back wall 24 that screens off the bicycle chain 11 on the rear thereof that is turned towards the wheel 1 and the guard base has a peripheral wall 25 which extends around the outer periphery of the back wall and is integral therewith, which wall 25 projects from the back wall 24 to the front. The back wall 24 is provided with a rear fork rod opening 26 that is such that the horizontal rear fork rod 2 extends through there when the chain guard has been fastened to the frame.

The guard base has a relatively large front wall opening 30 at the front that is such that the horizontal rear fork rod 2 extends through it when the chain guard has been fastened to the frame.

This example shows that the guard base has a front wall that has, as is the preferred option, a portion 31 that covers to a large extent the rear sprocket 10. The front wall also has, as is also the preferred choice, the form of a frame 32, which frame 32 is directed inwards from the peripheral wall 25 and extends around the front wall opening 30. The front wall does not cover in this example the front sprocket 9 to facilitate the assembly of the bicycle.

The parts of the front wall that are directed inwards from the peripheral wall 25, which, as is preferred, are present along the whole of the peripheral wall, give solidity to the guard base. Moreover, these front wall parts offer an abutment surface for the system element that is to be installed of the system according to the invention. In a possible variant, there are no parts of the front wall whatsoever that are directed inward from the peripheral wall 25 and the peripheral wall itself delimits the front wall opening 30. As already said, this model is not the preferred option.

The fastening of the guard base to the frame is implemented using suitable fixing means.

Preferably, provision is made for front fixing means for the fastening of the guard base to or near the crankshaft bearing bush and for rear fixing means for fastening the guard base to the horizontal rear fork rod.

For example, front fixing means are provided that comprise a bracket that can be installed around the crankshaft bearing bush, for example, a ring-shaped disc, wherein the guard base is provided with coupling means that cooperate with the support, for example, a ring-shaped slot in which the disc can be inserted.

Preferably, the rear fixing means provide an adjustable position of the guard base with regard to the horizontal rear fork and, by special preference, an adjustable angle position so that this angle position can be adjusted based on the angle with which the bicycle chain crosses the horizontal rear fork rod. For example provision is made for the possibility to adjust the position to multiple discrete angle positions. This notion is, in fact, known from NL1022879 of the applicant. Preferably, in the combination with the chain guard according to the invention, the front and rear fixing means are separate from each other and, therefore, without a common support as explained in NL 1022879.

Preferably, the guard base forms a longitudinal guide (more or less in the horizontal direction) for the rear fixing means. The back wall opening 26 of the guard base has two parallel edge parts 28 with in-between a slot 29 in the shown example so that one thing and another acts as a longitudinal guide for the rear fixing means.

Preferably, the rear fixing means connect the guard base directly to the horizontal rear fork rod 2.

The rear fixing means are embodied here as a snap-on fastening member 35 that provides a snap-on connection with the horizontal rear fork rod when exercising a suitable force. Possible embodiments including an adjustability of the angle position (for example, through a series of slots wherein the edges 28 can be inserted) of such a member 35 are shown in NL 1022879.

In a simple embodiment provision is made for a rear fastening support that is fastened to the rod 2 using one or more screws or bolts (and, for example, extends into a receiving provision in the guard).

In a variant, provision is made for the rod 2 to be provided with a welded on support, for example, a support on which a plastic part is fastened (for example, with a snap-on fastening), wherein then the guard base is fastened to the plastic part, for example, because the part has slots in which the edges 28 can be inserted. It should be clear that this set-up is also suitable for other chain guards than described here.

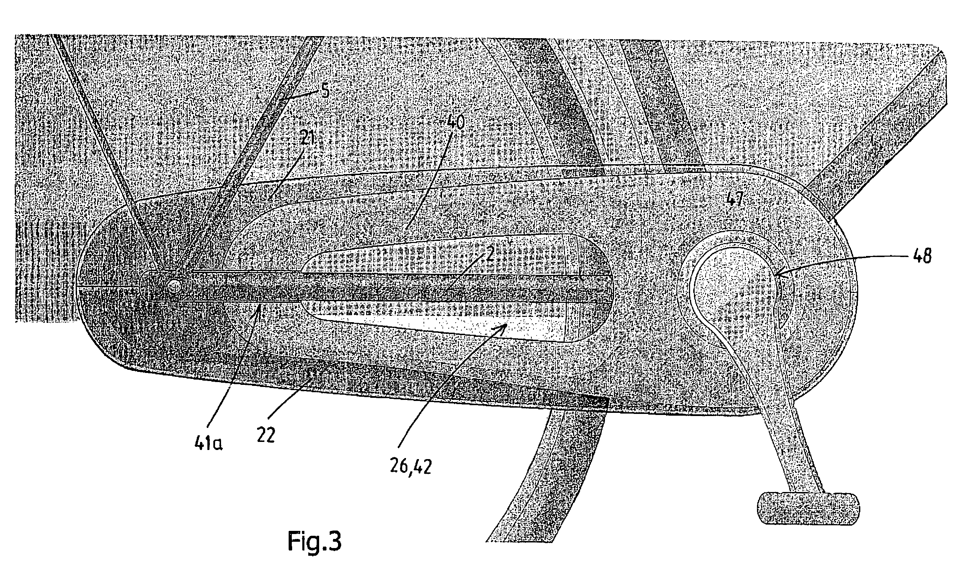

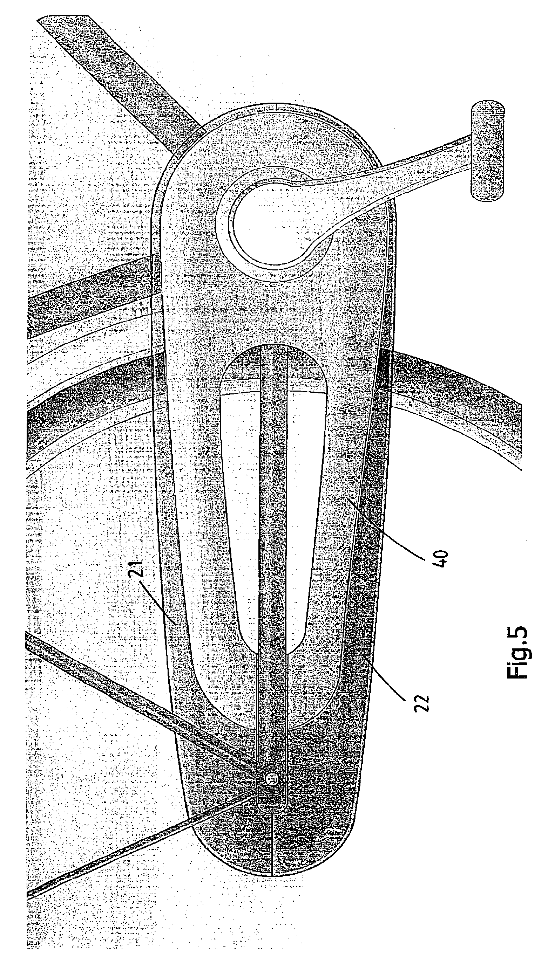

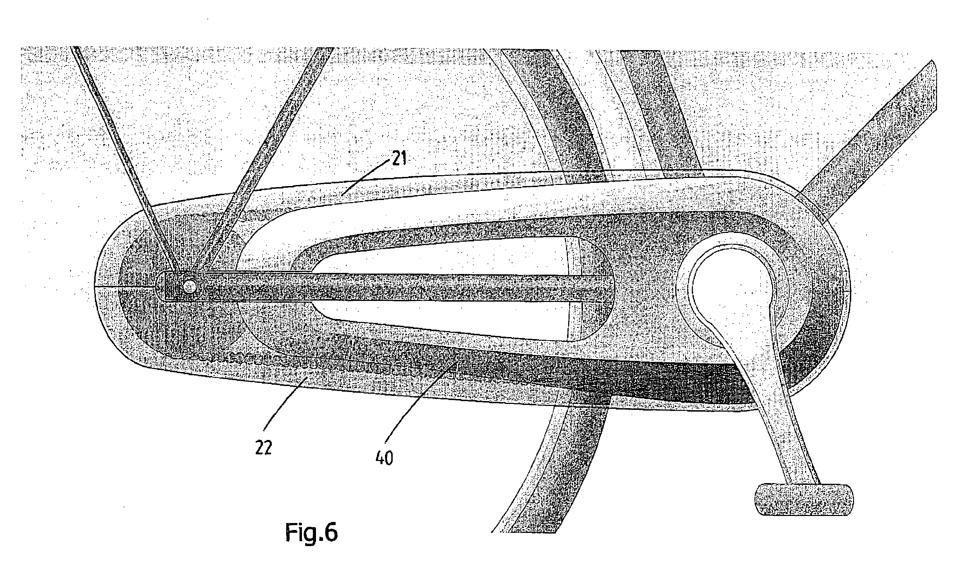

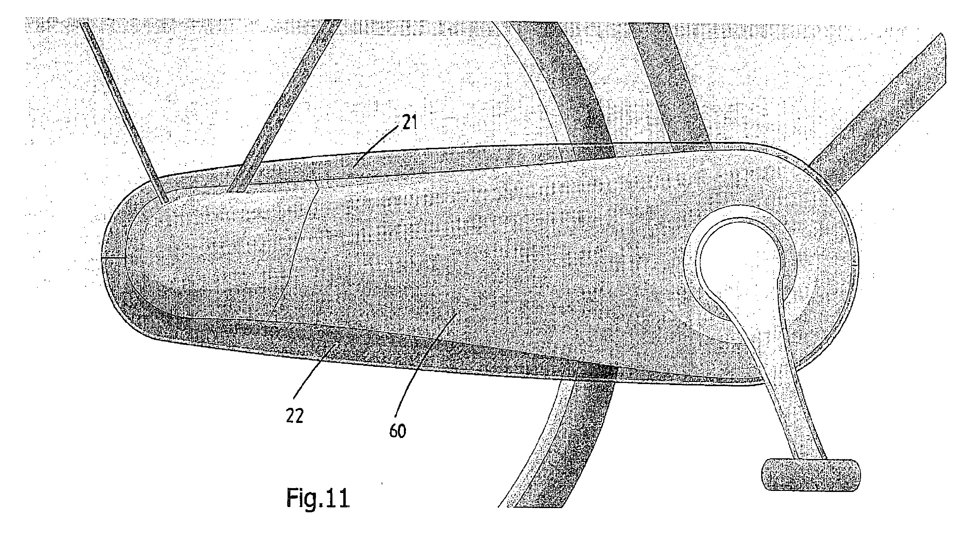

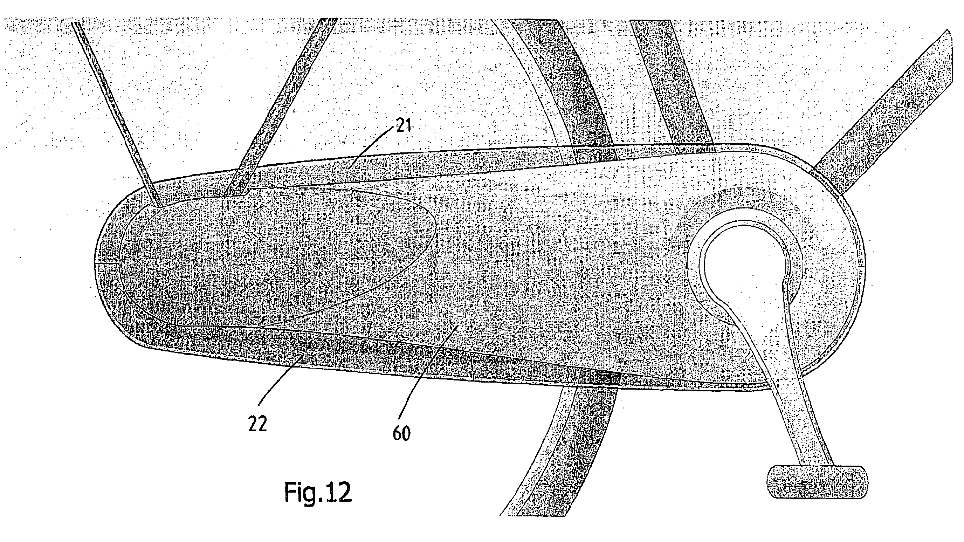

Now system elements a), b) and c) will be explained with reference to figures 3-12, which system elements can be installed on the guard base of figure 1 as preferred to realise a chain guard with the required design.

Firstly, the system element a) will be explained with reference to figures 3-6.

The system element a) is an opened front plate 40 that can be installed on the guard base, which opened front plate has a ring wall 41 (this does not have to be a closed ring as will be further explained) that extends around a see-through opening 42 in such a way that the ring wall 41 of the installed opened front plate 40 connects to the back wall 24 of the guard base around the rear fork rod opening 26 therein and in such a way that the horizontal rear fork rod 2 is universally exposed in the area of the see-through opening formed by the ring wall. The opened front plate 40 also has a cover portion 43 that is integral with the ring wall 41 and extends from the front of the ring wall around the ring wall and at least covers the front wall opening.

The opened front plate 40 is, preferably, a one-piece plastic part produced through injection moulding.

Preferably, snap-on fastening means are provided for installing the front plate 40 on the guard base, preferably, snap-on fingers 45 on the rear of the front plate 40 that engage behind the peripheral edge of the front wall opening as is shown in figure 3a.

As can be seen, the ring wall 41 has been interrupted here near the rear end of the see-through opening to allow that the horizontal rear fork rod 2 is received in this interruption 41 a.

The front plate 40 here has a front part 47 that covers the front sprocket and an opening 48 for the pedal construction to ensure the front wall opening is fully covered. This opening 48 is separated from the see-through opening.

The outer periphery of the front plate 40 lies against the front of the front wall of the guard base, which overlap, for example, safeguards that no undesired gap is visible between the front plate and the guard base. This construction with snap-on fingers or similar that engage on the peripheral edge of the front wall opening also tightens the front plate against the guard base.

It is clear from figure 3 that an airy view is obtained with an opened front plate 40, wherein one has a view through the chain guard and the horizontal rear fork rod lies exposed in this see-through opening.

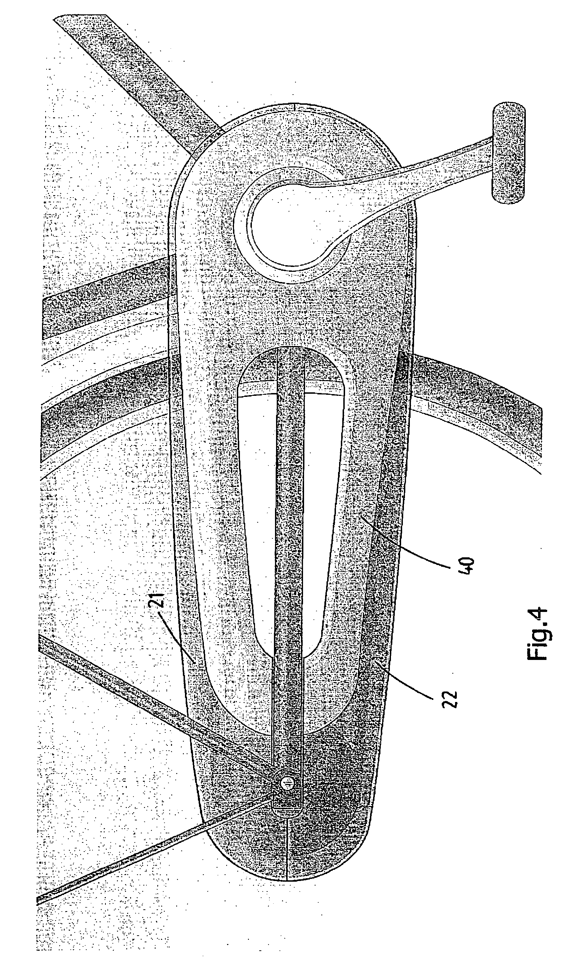

Figures 4-6 show different variants of the opened front plate 40. Each of these variants provides another view of the chain guard but it is sufficient for the producer of the chain guards to make and utilise a specific injection mould for each front plate. The guard base is identical in all the figures with regard to design, wherein, of course, it is easy to still make all kinds of versions of the guard base through colour variation by using the same design but a different colour combination. For example, the guard base can be transparent.

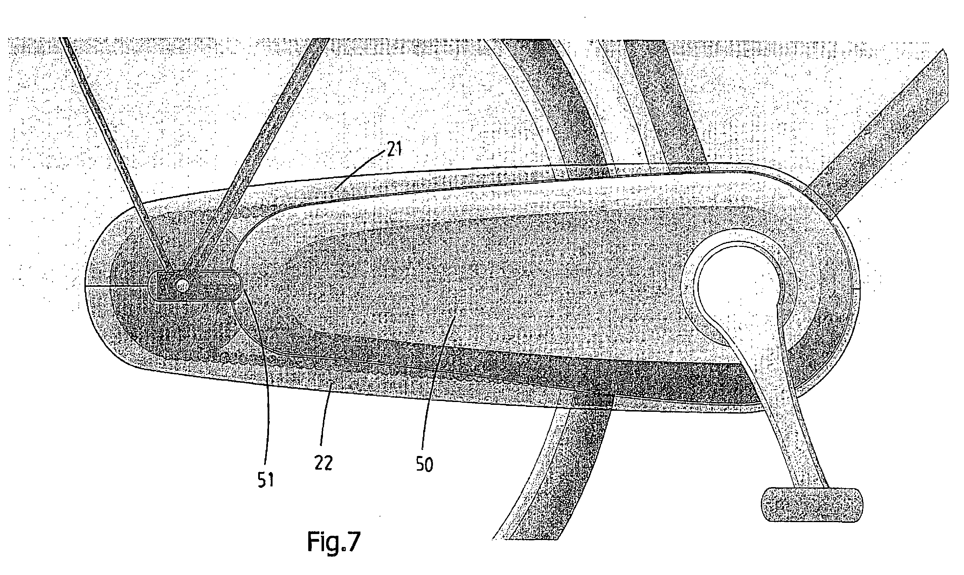

System element b), a first type of closed front plate 50, will be explained with reference to figures 7-9.

This first type of closed front plate 50 is, preferably, also a one-piece plastic part produced through injection moulding that can be installed on the same guard base as the opened front plate 40.

Provisions have been made with regard to this first type of closed front plate 50 that the front plate substantially fully covers the front wall opening, wherein the closed front plate 50 has been provided near the fastening of the rear shaft with an opening 51 (more or less slot-shaped in this example) for the rear part of the horizontal rear fork rod 2 so that only the rear part of the horizontal rear fork rod 2 is visible at the front of the chain guard.

It will be apparent that this first type is mainly suitable in the combination with a guard base that covers to a large extent the rear sprocket so that the combination of a guard base and a front plate provides a closed front of the chain guard.

The installation of the front plate 50 occurs, preferably, by using snap-on fingers or similar that engage behind the peripheral edge of the front wall opening.

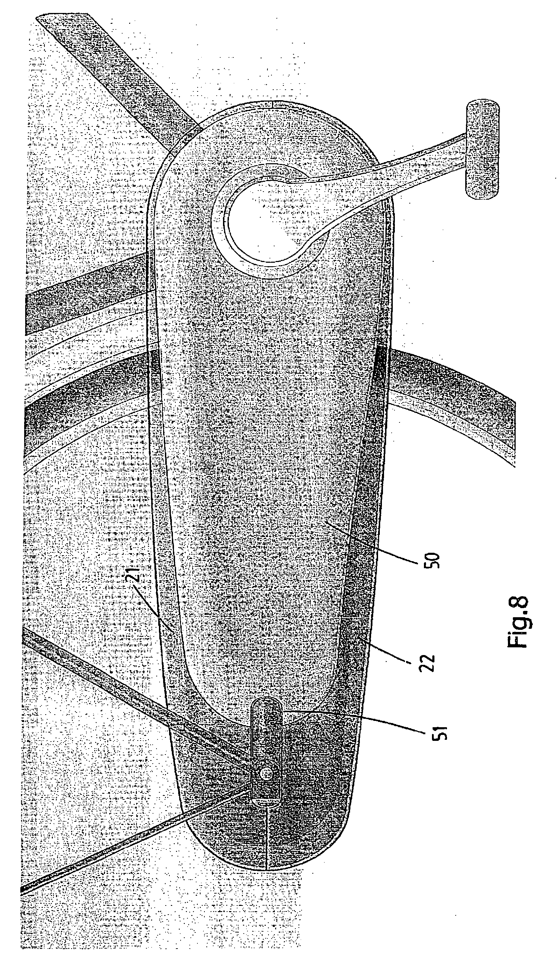

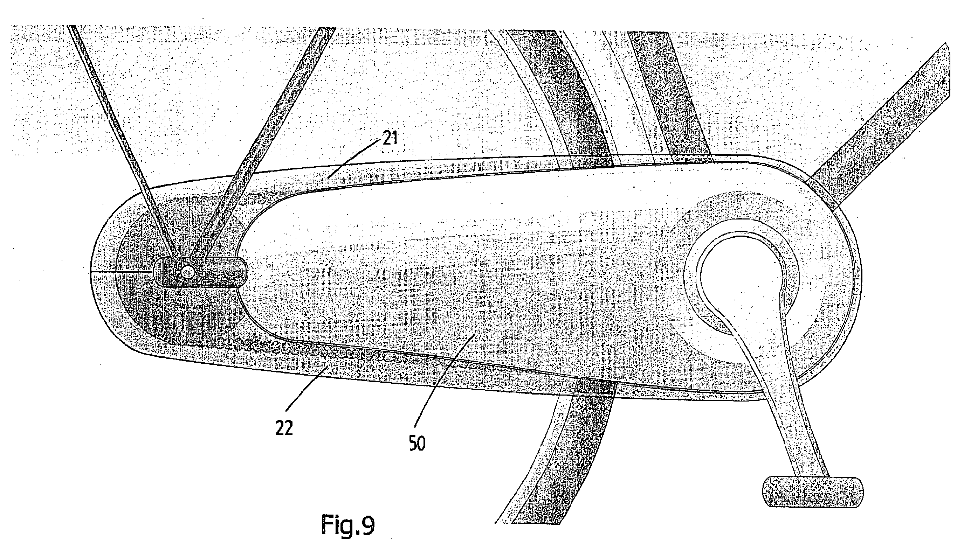

Figures 8 and 9 illustrate that the producer can meet the demand for different designs by making a specific mould for each specific design of the closed front plate in the combination with a guard base that can also be combined with one or more different system elements of the inventive system with a relatively small investment.

It will be apparent that if the closed front plate 40 is used in the combination with the guard base according to figure 1 at the side of the back wall, the opening 26 will form an undesired large opening between the interior of the guard and the outside world. The system may have provisions that include an additional sealing plate that is placed in or over the opening 26 so that the opening 26 is reduced to an opening where the rod 2 passes through exactly. Such an additional sealing plate is not, however, the preferred option.

Preferably, therefore, use is made of an injection mould for the injection moulding of one or more parts of the guard base, here the parts 21, 22, that is set up for adjusting the back wall opening 26 in the back wall in such a way that the back wall opening is executed as a see-through opening for the combination with system element a) (therefore, with dimensions that are considerably larger than required for allowing the rod 2 to pass through) and that the back wall opening is harmonised with the horizontal rear fork rod that extends there for the combination with system element b) or c) so that the back wall is, in fact, closed.

Preferably, the back wall has, in this case, a relatively small opening of which the edge rests or nearly rests against the rear fork rod that extends through the chain guard. This is, for example, possible by using a mould with a movable part (that forms the large version of the opening 26 in one position and the small version in the other position) or with a mould with one or more corresponding mould inserts.

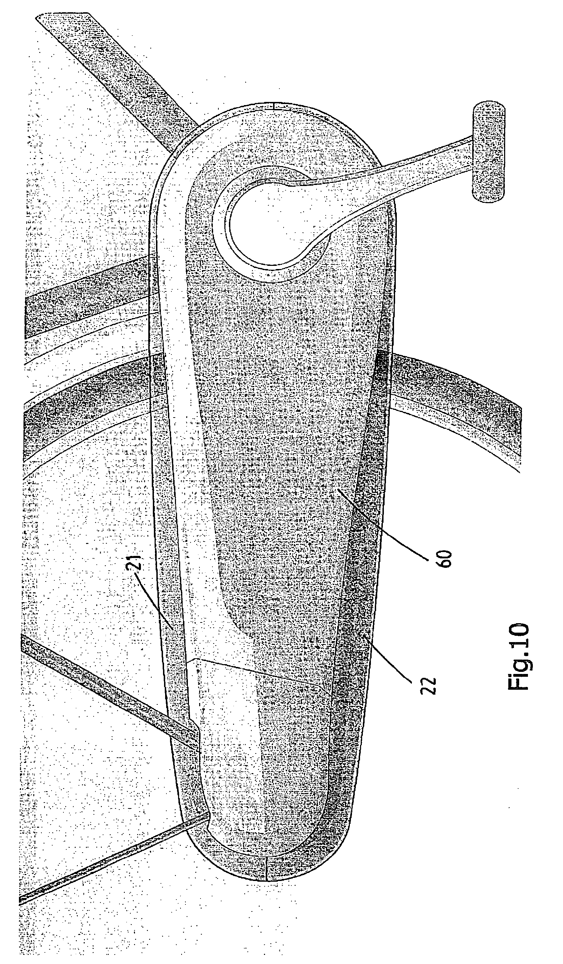

Now a second type of closed front plate 60 that can be installed on the guard base will be explained with reference to figures 10-12. The difference with the closed front plate 50 is, in fact, that this front plate 60 not only fully covers the front wall opening but also that it is provided in such a way that the horizontal rear fork rod on the front of the chain guard is completely covered. This version can also be set up in such a way that a gear mechanism (or operational elements thereof) that may be present on the rear shaft is covered and, therefore, is being protected against being contaminated or damaged.

This additional cover near the rear shaft usually requires a box-shaped embodiment at the location of the closed front plate. The preference may be, within this framework and due to aesthetic reasons, to provide this front plate 60 as two pieces with two injection moulded parts that are installed on each other (for example, by using snap-on fastening means). Such an embodiment is shown in figures 10-12.

It will be apparent that a front plate can be formed by using a multiple component injection mould technology, for example, to provide multiple colours.

Another design option is to form a front plate with the in-mould labelling technology where a preprinted label is placed in the mould so that the label defines (a part of) the appearance.

## Claims

1. System for assembling differently embodied chain guards, which chain guards are each adapted for the screening off of a bicycle chain (11) that is positioned around a front and a rear sprocket (9, 10) of a bicycle, which bicycle is of the type wherein the bicycle chain crosses a horizontal rear fork rod (2) of the frame;
which system comprises:
a guard base assembled from one or more parts (21, 22) each produced through injection moulding, which guard base has a back wall (24) that screens off the bicycle chain on the rear thereof which is directed towards the wheel, and which guard base has a peripheral wall (25) which extends around the outer periphery of the back wall and is an integral part therewith, which peripheral wall protrudes from the back wall to the front;
wherein the back wall is provided with a rear fork rod opening (26) that is such that the horizontal rear fork rod (2) extends through this when the chain guard is fastened to the frame;
wherein the guard base also has a front wall opening (30) at the front that is such that the horizontal rear fork rod (2) extends through this when the chain guard has been fastened to the frame;
said front wall opening (30) being present in a front wall (31, 32) of the guard base or the front wall opening (30) being delimited by the peripheral wall itself;
which system also comprises at least two of the system elements a), b), c) mentioned below that can be installed as desired on the guard base (21, 22) in order to realise the chain guard of the desired embodiment:
a) an opened front plate (40) that can be installed on the guard base, which opened front plate has a ring wall (41) that extends around a see-through opening (42) in such a way that the ring wall of the installed opened front plate connects to the back wall (24) of the guard base around the rear fork rod opening (26) therein and in such a way that the horizontal rear fork rod is exposed in the area of the see-through opening, and which opened front plate also has a cover plate portion (43) that is integral with the ring wall and extends from the front of the ring wall around the ring wall and at least covers the front wall opening (30).
b) a first type of a closed front plate (50) that can be installed on the guard base, which closed front plate substantially covers the front wall opening, wherein the closed front plate near the fastening of the bicycle rear wheel shaft is provided with an opening (51) for the rear part of the horizontal rear fork rod (2) so that only the rear part of the horizontal rear fork rod (2) can be seen at the front of the chain guard,
c) a second type of a closed front plate (60) that can be installed on the guard base, which closed front plate fully covers the front wall opening and is embodied in such a way that the horizontal rear fork rod (2) is completely covered at the front of the chain guard.

2. 10 System according to claim 1, wherein the one or more parts (21,22) of the guard base have been produced using an injection mould that is adapted for the adjustment of the back wall opening (26) the back wall in such a way that the back wall opening (26) is harmonised with the see-through opening (42) the opened front plate (40) for the combination with system element a) (40) and in such a way that the back wall opening is harmonised with the horizontal rear fork rod that extends through this for the combination with system element b) (50) or c) (60) so that the back wall is closed.

3. System according to claim 1 or 2, wherein the guard base has a front wall (31, 32) which is integral with the peripheral wall of the guard base and is directed inwards with regard to this, preferably, around the whole front wall opening.

4. System according to one or more of the preceding claims, wherein the front wall opening (31,32) is such that the front sprocket is not covered thereby, and wherein the front plate has a cover plate portion that covers the front sprocket.

5. System according to claim 3, wherein the front wall has a portion (31) that covers the rear sprocket to a large extent.

6. System according to claim 5, wherein the opened or closed front plate (40; 50; 60) overlaps the part that covers to a large extent the rear sprocket.

7. System according to one or more of the preceding claims, wherein the guard base is assembled from a top guard base part and a bottom guard base part (21, 22) that fit on each other at a division seam (23).

8. System according to claim 7, wherein the division seam (23) mainly extends in a plane through the shafts of the sprockets.

9. System according to one or more of the preceding claims, that also comprises front fixing means for the fastening of the guard base to or near to the crankshaft bearing bush.

10. System according to one or more of the preceding claims, that also comprises rear fixing means (35) for the fastening of the guard base to the horizontal rear fork rod.

11. System according to claim 9, wherein the front fixing means comprise a bracket that can be installed around the crankshaft bearing bush, for example, a ring-shaped disk, and wherein the guard base is provided with the coupling means that cooperate with the bracket, for example, a ring-shaped slot in which the disc can be inserted.

12. System according to claim 10, wherein the rear fixing means (35) provide an adjustable position of the guard base with regard to the horizontal rear fork, for example, an adjustable angle position so that this angle position can be adjusted based on the angle with which the bicycle chain crosses the horizontal rear fork rod.

13. System according to claim 10 or 12, wherein the guard base forms a longitudinal guide for the rear fixing means, for example wherein the back wall opening of the guard base has two parallel edge sections (28) with a slot in between (29) so that one thing and another acts as a longitudinal guide for the rear fixing means.

14. Method for the production of differently embodied chain guards, which chain guards are adapted for the screening off of a bicycle chain (11) that is positioned around a front and a rear sprocket (9, 10) of a bicycle, which bicycle is of the type wherein the bicycle chain crosses a horizontal rear fork rod (2) of the frame,
wherein the method comprises:
the production of a guard base assembled from one or more parts (21, 22) each produced through injection moulding, wherein the guard base has a back wall (24) that screens off the bicycle chain on the rear thereof directed towards the wheel, and wherein the guard base has a peripheral wall (25) which extends around the outer periphery of the back wall and is integral therewith, which peripheral wall protrudes from the back wall to the front,
wherein the back wall is provided with a rear fork rod opening (26) that is such that the horizontal rear fork rod extends through this when the chain guard is fastened to the frame,
wherein the guard base also has a front wall opening (30) at the front that is such that the horizontal rear fork rod extends through this when the chain guard has been fastened to the frame, said front wall opening (30) being present in a front wall (31, 32) of the guard base or the front wall opening (30) being delimited by the peripheral wall itself;
wherein the method also comprises the producing through injection moulding of at least two of the system elements a), b), c) mentioned below that can be installed on the guard base as desired in order to realise the chain guard of the desired embodiment:
a) an opened front plate (40) that can be installed on the guard base, which opened front plate has a ring wall (41) that extends around a see-through opening (42) in such a way that the ring wall of the installed opened front plate connects to the back wall (24) of the guard base around the rear fork rod opening (26) therein and in such a way that the horizontal rear fork rod is exposed in the area of the see-through opening formed by the ring wall, and wherein the opened front plate also has a cover plate portion (43) that is integral with the ring wall and extends from the front of the ring wall around the ring wall and at least covers the front wall opening (30);
b) a first type of a closed front plate (50) that can be installed on the guard base, which closed front plate basically covers the front wall opening, which closed front plate near the attachment of the bicycle rear wheel shaft is provided with an opening (51) for the rear part of the horizontal rear fork rod so that only the rear part of the horizontal rear fork rod can be seen at the front of the chain guard;
c) a second type of a closed front plat (60) that can be installed on the guard base, which closed front plate fully covers the front wall opening and is embodied in such a way that the horizontal rear fork rod is completely covered at the front of the chain guard.

15. Method according to claim 14, wherein the one or more parts of the guard base are produced using an injection mould that is adapted for the adjustment of the back wall opening (26) in the back wall in such a way that the back wall opening (26) is harmonised with the see-through opening (42) in the opened front plate (40) for the combination with system element a) and in such a way that the back wall opening (26) is harmonised with the horizontal rear fork rod that extends through this for the combination with system element b) or c) so that the back wall is closed.

16. Bicycle provided with a chain guard according to claim 1 and/or bicycle provided with a chain guard produced according to the method described in claim 14.

## Patentansprüche

1. System zum Montieren unterschiedlich ausgeführter Kettenschutzvorrichtungen, wobei die Kettenschutzvorrichtungen jeweils zum Abschirmen einer Fahrradkette (11) eingerichtet sind, die um ein vorderes und ein hinteres Kettenrad (9, 10) eines Fahrrades herum positioniert ist, und das Fahrrad von dem Typ ist, bei dem die Fahrradkette eine horizontale Hinterradgabel (2) des Rahmens kreuzt;
wobei das System umfasst:
einen Schutz-Träger, der aus einem oder mehreren Teilen (21, 22) zusammengesetzt ist, die jeweils mittels Spritzgießen hergestellt werden, wobei der Schutz-Träger eine Rückwand (24) hat, die die Fahrradkette an ihrer Rückseite abschirmt, die zu dem Rad hin gerichtet ist, der Schutz-Träger eine Umfangswand (25) hat, die um den Außenumfang der Rückwand herum verläuft und ein damit integral ausgebildeter Teil ist, und die Umfangswand von der Rückwand zu der Vorderseite vorsteht;
wobei die Rückwand mit einer Hinterradgabel-Öffnung (26) versehen ist, die so ausgeführt ist, dass sich die horizontale Hinterradgabel (2) durch sie hindurch erstreckt, wenn die Kettenschutzvorrichtung an dem Rahmen befestigt ist;
wobei der Schutz-Träger des Weiteren eine Vorderwand-Öffnung (30) an der Vorderseite hat, die so ausgeführt ist, dass sich die horizontale Hinterradgabel (2) durch sie hindurch erstreckt, wenn der Kettenschutz an dem Rahmen befestigt worden ist, und die Vorderwand-Öffnung (30) in einer Vorderwand (31, 32) des Schutz-Trägers vorhanden ist oder die Vorderwand-Öffnung (30) durch die Umfangswand selbst begrenzt wird;
und das System des Weiteren wenigstens zwei der unten aufgeführten System-Elemente a), b), c) umfasst, die, wenn gewünscht, an dem Schutz-Träger (21, 22) installiert werden können, um den Kettenschutz in der gewünschten Ausführungsform zu schaffen:
a) eine offene Vorderplatte (40), die an dem Schutz-Träger installiert werden kann, wobei die offene Vorderplatte eine Ringwand (41) hat, die so um eine Sichtöffnung (42) herum verläuft, dass die Ringwand der installierten offenen Vorderplatte mit der Rückwand (24) des Schutz-Trägers um die Hinterradgabel-Öffnung (26) darin verbunden ist, und so, dass die horizontale Hinterradgabel in dem Bereich der Sichtöffnung freiliegt, und die offene Vorderplatte des Weiteren einen Abdeckplattenabschnitt (43) hat, der integral mit der Ringwand ausgebildet ist und sich von der Vorderseite der Ringwand um die Ringwand herum erstreckt und wenigstens die Vorderwand-Öffnung (30) abdeckt,
b) einen ersten Typ einer geschlossenen Vorderplatte (50), die an dem Schutz-Träger installiert werden kann, wobei die geschlossene Vorderplatte die Vorderwand-Öffnung im Wesentlichen abdeckt, die geschlossene Vorderplatte in der Nähe der Befestigung der Fahrrad-Rückradwelle mit einer Öffnung (51) für den hinteren Teil der horizontalen Hinterradgabel (2) versehen ist, so dass nur der hintere Teil der horizontalen Hinterradgabel (2) an der Vorderseite des Kettenschutzes zu sehen ist,
c) einen zweiten Typ einer geschlossenen Vorderplatte (60), die an dem Schutz-Träger installiert werden kann, wobei die geschlossene Vorderplatte die Vorderwand-Öffnung vollständig abdeckt und so ausgeführt ist, dass die horizontale Hinterradgabel (2) an der Vorderseite des Kettenschutzes vollständig abgedeckt ist.

2. System nach Anspruch 1, wobei das eine oder die mehreren Teil/e (21, 22) des Schutz-Trägers unter Verwendung einer Spritzgießform hergestellt worden ist/sind, die zur Anpassung der Rückwand-Öffnung (26) in der Rückwand so eingerichtet ist, dass die Rückwand-Öffnung (26) an die Sichtöffnung (42) in der offenen Vorderplatte (40) für die Kombination mit System-Element a) (40) angeglichen wird, und so, dass die Rückwand-Öffnung an die horizontale Hinterradgabel, die sich durch sie hindurch erstreckt, für die Kombination mit System-Element b) (50) oder c) (60) angeglichen wird, so dass die Rückwand geschlossen ist.

3. System nach Anspruch 1 oder 2, wobei der Schutz-Träger eine Vorderwand (31, 32) hat, die integral mit der Umfangswand des Schutz-Trägers ausgebildet ist und in Bezug darauf, vorzugsweise um die gesamte Vorderwand-Öffnung herum, nach innen gerichtet ist.

4. System nach einem oder mehreren der vorangehenden Ansprüche, wobei die Vorderwandöffnung (31, 32) so ausgeführt ist, dass das vordere Kettenrad von ihr nicht abgedeckt wird, und die Vorderplatte einen Abdeckplattenabschnitt hat, der das vordere Kettenrad abdeckt.

5. System nach Anspruch 3, wobei die Vorderwand einen Abschnitt (31) hat, der das hintere Kettenrad weitgehend abdeckt.

6. System nach Anspruch 5, wobei die offene oder geschlossene Vorderplatte (40; 50; 60) den Teil überlappt, der das hintere Kettenrad weitgehend abdeckt.

7. System nach einem oder mehreren der vorangehenden Ansprüche, wobei der Schutz-Träger aus einem oberen Schutz-Trägerteil und einem unteren Schutz-Trägerteil (21, 22) zusammengesetzt ist, die an einer Trennnaht (23) aneinanderpassen.

8. System nach Anspruch 7, wobei die Trennnaht (23) hauptsächlich in einer Ebene durch die Wellen der Kettenräder hindurch verläuft.

9. System nach einem oder mehreren der vorangehenden Ansprüche, das des Weiteren eine vordere Befestigungseinrichtung zum Befestigen des Schutz-Trägers an oder in der Nähe der Kurbellagerbuchse umfasst.

10. System nach einem oder mehreren der vorangehenden Ansprüche, das des Weiteren eine hintere Befestigungseinrichtung (35) zum Befestigen des Schutz-Trägers an der horizontalen Hinterradgabel umfasst.

11. System nach Anspruch 9, wobei die vordere Befestigungseinrichtung einen Halter umfasst, der um die Kurbellagerbuchse herum installiert werden kann, beispielsweise eine ringförmige Scheibe, und der Schutz-Träger mit der Kopplungseinrichtung versehen ist, die mit dem Halter zusammenwirkt, beispielsweise einem ringförmigen Schlitz, in den die Scheibe eingesetzt werden kann.

12. System nach Anspruch 10, wobei die hintere Befestigungseinrichtung (35) ein Verstellen der Position des Schutz-Trägers in Bezug auf die horizontale Hinterradgabel ermöglicht, so beispielsweise ein Verstellen der Winkelposition, so dass diese Winkelposition auf Basis des Winkels verstellt werden kann, mit dem die Fahrradkette die horizontale Hinterradgabel kreuzt.

13. System nach Anspruch 10 oder 12, wobei der Schutz-Träger eine Längsführung für hintere Befestigungseinrichtung aufweist, beispielsweise die Rückwand-Öffnung des Schutz-Trägers zwei parallele Kantenabschnitte (28) mit einem Schlitz (29) dazwischen aufweist, so dass beide als eine Längsführung für die hintere Befestigungseinrichtung wirken.

14. Verfahren zur Herstellung unterschiedlich ausgeführter Kettenschutzvorrichtungen, wobei die Kettenschutzvorrichtungen so eingerichtet sind, dass sie eine Fahrradkette (11) abdecken, die um ein vorderes und ein hinteres Kettenrad (9, 10) eines Fahrrades herum positioniert ist, und das Fahrrad von dem Typ ist, bei dem die Fahrradkette eine Hinterradgabel (2) des Rahmens kreuzt, und das Verfahren umfasst:
die Herstellung eines Schutz-Trägers, der aus einem oder mehreren Teilen (21, 22) zusammengesetzt wird, die jeweils mittels Spritzgießen hergestellt werden, wobei der Schutz-Träger eine Rückwand (24) hat, die die Fahrradkette an ihrer Rückseite abschirmt, die zu dem Rad hin gerichtet ist, der Schutz-Träger eine Umfangswand (25) hat, die um den Außenumfang der Rückwand herum verläuft und integral damit ausgebildet ist, und die Umfangswand von der Rückwand zu der Vorderseite vorsteht,
wobei die Rückwand mit einer Hinterradgabel-Öffnung (26) versehen ist, die so ausgeführt ist, dass sich die horizontale Hinterradgabel durch sie hindurch erstreckt, wenn der Kettenschutz an dem Rahmen befestigt ist,
wobei der Schutz-Träger des Weiteren eine Vorderwand-Öffnung (30) an der Vorderseite hat, die so ausgeführt ist, dass sich die horizontale Hinterradgabel durch sie hindurch erstreckt, wenn die Kettenschutzvorrichtung an dem Rahmen befestigt worden ist, und die Vorderwand-Öffnung (30) in einer Vorderwand (31, 32) des Schutz-Trägers vorhanden ist oder die Vorderwand-Öffnung (30) durch die Umfangswand selbst begrenzt wird;
wobei das Verfahren des Weiteren das Herstellen wenigstens zwei der unten aufgeführten System-Elemente a), b), c) mittels Spritzgießen umfasst, die an dem Schutz-Träger wie gewünscht installiert werden können, um den Kettenschutz der gewünschten Ausführungsform zu schaffen:
a) eine offene Vorderplatte (40), die an dem Schutz-Träger installiert werden kann, wobei die offene Vorderplatte eine Ringwand (41) hat, die so um eine Sichtöffnung (42) herum verläuft, dass die Ringwand der installierten offenen Vorderplatte mit der Rückwand (24) des Schutz-Trägers um die Hinterradgabel-Öffnung (26) darin verbunden ist, und so, dass die horizontale Hinterradgabel in dem Bereich der Sichtöffnung freiliegt, und die offene Vorderplatte des Weiteren einen Abdeckplattenabschnitt (43) hat, der integral mit der Ringwand ausgebildet ist und sich von der Vorderseite der Ringwand um die Ringwand herum erstreckt und wenigstens die Vorderwand-Öffnung (30) abdeckt,
b) einen ersten Typ einer geschlossenen Vorderplatte (50), die an dem Schutz-Träger installiert werden kann, wobei die geschlossene Vorderplatte die Vorderwand-Öffnung im Wesentlichen abdeckt, die geschlossene Vorderplatte in der Nähe der Anbringung der Fahrrad-Rückradwelle mit einer Öffnung (51) für den hinteren Teil der horizontalen Hinterradgabel (2) versehen ist, so dass nur der hintere Teil der horizontalen Hinterradgabel (2) an der Vorderseite des Kettenschutzes zu sehen ist,
c) einen zweiten Typ einer geschlossenen Vorderplatte (60), die an dem Schutz-Träger installiert werden kann, wobei die geschlossene Vorderplatte die Vorderwand-Öffnung vollständig abdeckt und so ausgeführt ist, dass die horizontale Hinterradgabel an der Vorderseite des Kettenschutzes vollständig abgedeckt ist.

15. Verfahren nach Anspruch 14, wobei das eine oder die mehreren Teil/e (21, 22) des Schutz-Trägers unter Verwendung einer Spritzgießform hergestellt wird/werden, die zur Anpassung der Rückwand-Öffnung (26) in der Rückwand so eingerichtet ist, dass die Rückwand-Öffnung (26) an die Sichtöffnung (42) in der offenen Vorderplatte (40) für die Kombination mit System-Element a) angeglichen wird, und so, dass die Rückwand-Öffnung (26) an die horizontale Hinterradgabel, die sich durch sie hindurch erstreckt, für die Kombination mit System-Element b) oder c) angeglichen wird, so dass die Rückwand geschlossen ist.

16. Fahrrad, das mit einer Kettenschutzvorrichtung nach Anspruch 1 versehen ist, und/oder Fahrrad, das mit einer Kettenschutzvorrichtung versehen ist, die mit dem in Anspruch 14 beschriebenen Verfahren hergestellt wird.

## Revendications

1. Système pour assembler des protections de chaîne de configurations différentes, lesdites protections de chaîne étant chacune adaptées pour isoler une chaîne de bicyclette (11) positionnée autour d'une couronne dentée avant et arrière (9, 10) d'une bicyclette, ladite bicyclette étant du type dans lequel la chaîne de bicyclette croise une tige de fourche arrière (2) horizontale du cadre ;
ledit système comprenant :
une base de protection, assemblée à partir d'une ou plusieurs parties (21, 22) chacune fabriquée par moulage par injection, ladite base de protection comprenant une paroi arrière (24) isolant la chaîne de bicyclette sur l'arrière de celle-ci, orientée vers la roue, et base de protection comprenant une paroi périphérique (25) s'étendant autour de la périphérie extérieure de la paroi arrière et faisant partie intégrante avec elle, ladite paroi périphérique faisant saillie de la paroi arrière vers l'avant ;
dans lequel la paroi arrière est munie d'une ouverture pour la tige de fourche arrière (26), telle que la tige de fourche arrière (2) horizontale s'étend à travers celle-ci, lorsque la protection de chaîne est fixée au cadre ;
dans lequel la base de protection comprend également une ouverture de paroi avant (30) à l'avant, telle que la tige de fourche arrière (2) horizontale s'étend à travers celle-ci, lorsque la protection de chaîne a été fixée au cadre ;
ladite ouverture de paroi avant (30) étant présente dans une paroi avant (31, 32) de la base de protection, ou l'ouverture de paroi avant (30) étant délimitée par la paroi périphérique elle-même;
ledit système comprenant également au moins deux des éléments de système a), b), c) mentionnés ci-dessous, pouvant être installés tel que souhaité sur la base de protection (21, 22), de manière à réaliser la protection de chaîne du mode de réalisation souhaité:
a) une plaque avant (40) munie d'une ouverture, pouvant être installée sur la base de protection, ladite plaque avant munie d'une ouverture comprenant une paroi annulaire (41) s'étendant autour d'une ouverture d'observation (42), de manière que la paroi annulaire de la plaque avant munie d'une ouverture installée relie à la paroi arrière (24) de la base de protection, autour de l'ouverture pour tige de fourche arrière (26) s'y trouvant, et de manière que la tige de fourche arrière horizontale soit exposée dans la zone de l'ouverture d'observation, et ladite plaque avant munie d'une ouverture comprend également une partie formant plaque de couverture (43), réalisée d'une seule pièce avec la paroi annulaire et s'étendant à partir de l'avant de la paroi annulaire autour de la paroi annulaire, et couvre au moins l'ouverture de paroi avant (30);
b) un premier type de plaque avant fermée (50), pouvant être installée sur la base de protection, ladite plaque avant fermée couvrant sensiblement l'ouverture de paroi avant, dans lequel la plaque avant fermée proche de la fixation de l'arbre de roue arrière de bicyclette est munie d'une ouverture (51) pour la partie arrière de la tige de fourche arrière (2) horizontale, de manière que seule la partie arrière de la tige de fourche arrière (2) horizontale puisse être vue à l'avant de la protection de chaîne;
c) un deuxième type de plaque avant fermée (60), pouvant être installée sur la base de protection, ladite plaque avant fermée couvrant complètement l'ouverture de paroi avant et étant réalisée de manière que la tige de fourche arrière (2) horizontale soit complètement couverte à l'avant de la protection de chaîne.

2. Système selon la revendication 1, dans lequel les une ou plusieurs parties (21, 22) de la base de protection ont été fabriquées en utilisant un moule d'injection adapté pour l'ajustement de l'ouverture de paroi arrière (26) dans la paroi arrière, de manière que l'ouverture de paroi arrière (26) soit harmonisée avec l'ouverture d'observation (42) située dans la plaque avant munie d'une ouverture (40), pour la combinaison avec l'élément de système a) (40) et de manière que l'ouverture de paroi arrière soit harmonisée avec la tige de fourche arrière horizontale s'étendant à travers celle-ci, pour la combinaison avec l'élément de système b) (50) ou c) (60), de manière que la paroi arrière soit fermée.

3. Système selon la revendication 1 ou 2, dans lequel la base de protection comprend une paroi avant (31, 32) réalisée d'une seule pièce avec la paroi périphérique de la base de protection et orientée vers l'intérieur eu égard à celle-ci, de préférence autour de la totalité de l'ouverture de paroi avant.

4. Système selon une ou plusieurs des revendications précédentes, dans lequel l'ouverture de paroi avant (31, 32) est telle que la couronne dentée avant n'est pas couverte par celle-ci, et dans lequel la plaque avant comprend une partie de plaque de couvercle couvrant la couronne dentée avant.

5. Système selon la revendication 3, dans lequel la paroi avant comprend une partie (31) couvrant la couronne dentée arrière dans une large mesure.

6. Système selon la revendication 5, dans lequel la plaque avant ouverte ou fermée (40 ; 50 ; 60) chevauche la partie couvrant la couronne dentée arrière dans une large mesure.

7. Système selon une ou plusieurs des revendications précédentes, dans lequel la base de protection est assemblée à partir d'une partie formant base de protection supérieure et une partie formant base de protection inférieure (21, 22), s'adaptant sur chaque autre à un joint de division (23).

8. Système selon la revendication 7, dans lequel le joint de division (23) s'étend principalement dans un plan passant par les arbres des couronnes dentées.

9. Système selon une ou plusieurs des revendications précédentes, comprenant également des moyens de fixation avant pour la fixation de la base de protection à ou près du coussinet du palier de manivelle.

10. Système selon une ou plusieurs des revendications précédentes, comprenant également des moyens de fixation arrière (35) pour la fixation de la base de protection à la tige de fourche arrière horizontale.

11. Système selon la revendication 9, dans lequel les moyens de fixation avant comprennent un support, pouvant être installé autour du coussinet du palier de manivelle, par exemple un disque en forme d' anneau, et dans lequel la base de protection est munie de moyens d'accouplement coopérant avec le support, par exemple une fente en forme d'anneau dans laquelle le disque peut être inséré.

12. Système selon la revendication 10, dans lequel les moyens de fixation arrière (35) fournissent une position réglable de la base de protection par rapport à la fourche arrière horizontale, par exemple une position angulaire réglable de manière que cette position angulaire puisse être réglée d'après l'angle selon lequel la chaîne de bicyclette croise la tige de fourche arrière horizontale.

13. Système selon la revendication 10 ou 12, dans lequel la base de protection forme un guide longitudinal pour les moyens de fixation arrière, par exemple dans lequel l'ouverture de paroi arrière de la base de protection comprend deux sections de bordure (28) parallèles, avec une fente (29) entre elles, de manière qu'une chose et une autre agissent en tant que guide longitudinal pour les moyens de fixation arrière.

14. Procédé de fabrication de protections de chaîne de configurations différentes, lesdites protections de chaîne étant adaptées pour isoler une chaîne de bicyclette (11) positionnée autour d'une couronne dentée avant et arrière (9, 10) d'une bicyclette, ladite bicyclette étant du type dans lequel la chaîne de bicyclette croise une tige de fourche arrière (2) horizontale du cadre,
dans lequel le procédé comprend:
la fabrication d'une base de protection, assemblée à partir d'une ou plusieurs parties (21, 22) chacune fabriquée par moulage par injection, dans lequel la base de protection comprend une paroi arrière (24) isolant la chaîne de bicyclette sur l'arrière de celle-ci, orientée vers la roue, et dans lequel la base de protection comprend une paroi périphérique (25) s'étendant autour de la périphérie extérieure de la paroi arrière et faisant partie intégrante avec elle, ladite paroi périphérique faisant saillie de la paroi arrière vers l'avant;
dans lequel la paroi arrière est munie d'une ouverture pour la tige de fourche arrière (26), telle que la tige de fourche arrière horizontale s'étend à travers celle-ci, lorsque la protection de chaîne est fixée au cadre;
dans lequel la base de protection comprend également une ouverture de paroi avant (30) à l'avant, telle que la tige de fourche arrière horizontale s'étend à travers celle-ci, lorsque la protection de chaîne a été fixée au cadre;
ladite ouverture de paroi avant (30) étant présente dans une paroi avant (31, 32) de la base de protection, ou l'ouverture de paroi avant (30) étant délimitée par la paroi périphérique elle-même;
ledit procédé comprenant également la fabrication, par moulage par injection, d'au moins deux des éléments de système a), b), c) mentionnés ci-dessous, pouvant être installés tel que souhaité sur la base de protection (21, 22), de manière à réaliser la protection de chaîne du mode de réalisation souhaité:
a) une plaque avant (40) munie d'une ouverture, pouvant être installée sur la base de protection, ladite plaque avant munie d'une ouverture comprenant une paroi annulaire (41) s'étendant autour d'une ouverture d'observation (42), de manière que la paroi annulaire de la plaque avant munie d'une ouverture installée relie à la paroi arrière (24) de la base de protection, autour de l'ouverture pour tige de fourche arrière (26) s'y trouvant, et de manière que la tige de fourche arrière horizontale soit exposée dans la zone de l'ouverture d'observation formée par la paroi annulaire, et dans lequel la plaque avant munie d'une ouverture comprend également une partie formant plaque de couverture (43), réalisée d'une seule pièce avec la paroi annulaire et s'étendant à partir de l'avant de la paroi annulaire autour de la paroi annulaire, et couvre au moins l'ouverture de paroi avant (30);
b) un premier type de plaque avant fermée (50), pouvant être installée sur la base de protection, ladite plaque avant fermée couvrant sensiblement l'ouverture de paroi avant, la plaque avant fermée proche de la fixation de l'arbre de roue arrière de bicyclette est munie d'une ouverture (51) pour la partie arrière de la tige de fourche arrière horizontale, de manière que seule la partie arrière de la tige de fourche arrière horizontale puisse être vue à l'avant de la protection de chaîne;
c) un deuxième type de plaque avant fermée (60), pouvant être installée sur la base de protection, ladite plaque avant fermée couvrant complètement l'ouverture de paroi avant et étant réalisée de manière que la tige de fourche arrière horizontale soit complètement couverte à l'avant de la protection de chaîne.

15. Procédé selon la revendication 14, dans lequel les une ou plusieurs parties de la base de protection ont été fabriquées en utilisant un moule d'injection adapté pour l'ajustement de l'ouverture de paroi arrière (26) dans la paroi arrière, de manière que l'ouverture de paroi arrière (26) soit harmonisée avec l'ouverture d'observation (42) située dans la plaque avant munie d'une ouverture (40), pour la combinaison avec l'élément de système a) et de manière que l'ouverture de paroi arrière (26) soit harmonisée avec la tige de fourche arrière horizontale s'étendant à travers celle-ci, pour la combinaison avec l'élément de système b) ou c), de manière que la paroi arrière soit fermée.

16. Bicyclette équipée d'une protection de chaîne selon la revendication 1 et/ou bicyclette équipée d'une protection de chaîne fabriquée selon le procédé décrit à la revendication 14.
